# EUROPÄISCHE PATENTSCHRIFT

(11) **EP 0 939 029 B1**
(45) Veröffentlichungstag und Bekanntmachung des Hinweises auf die Patenterteilung: **21.04.2004**
(21) Anmeldenummer: 99102137.9
(22) Anmeldetag: 03.02.1999
(51) Int. Cl.: B64C 27/615, B64C 27/00

(54) **Rotorblatt für einem Hubschrauber**
Rotor blade for helicopter
Pale de rotor pour hélicoptère

(30) Priorität: 27.02.1998 DE 19808196
(43) Veröffentlichungstag der Anmeldung: 01.09.1999
(73) Patentinhaber: EUROCOPTER DEUTSCHLAND GmbH, D-81663 München (DE)
(72) Erfinder: Bauer, Karl, 83564 Soyen (DE)
(74) Vertreter: Baum, Wolfgang, Dipl.-Ing.

(56) Entgegenhaltungen:
- DE-A- 2 804 254
- US-A- 5 224 826
- HALL S R ET AL: "DEVELOPMENT OF A PIEZOELECTRIC SERVOFLAP FOR HELICOPTER ROTOR CONTROL" SMART MATERIALS AND STRUCTURES,GB,IOP PUBLISHING LTD., BRISTOL, Bd. 5, Nr. 1, 1. Februar 1996 (1996-02-01), Seiten 26-34, XP000553225 ISSN: 0964-1726

## Beschreibung

### TECHNISCHES GEBIET

Die vorliegende Erfindung betrifft ein Rotorblatt für einen Hubschrauber, wobei das Rotorblatt in seinem Profilbereich eine bewegliche Klappe aufweist.

### STAND DER TECHNIK

Rotorblätter für Hubschrauber haben in ihrem Profilbereich oftmals bewegliche Klappen am hinteren Profilende. Die Klappen dienen zur Steuerung des Hubschraubers. Bei den bekannten Rotorblättern sind die Klappen gelenkig gelagert und werden mechanisch über eine Taumelscheibe angesteuert. Das Anstellen der Klappen über die Taumelscheibe kann dabei kollektiv oder auch zyklisch erfolgen, mit einer Frequenz, die zum Beispiel in einem Bereich von 7 Hz liegt.

Bei neueren Entwicklungen werden Klappen im hinteren Profilbereich verwendet, die elektrisch angesteuert werden. Diese Klappen dienen dazu, die Rotorleistung zu erhöhen und gleichzeitig das Vibrationsniveau zu senken. Die Klappen sind dabei mit einem Gelenk gelagert und beeinflussen durch die Ansteuerung mit relativ hoher Frequenz das dynamische Blattverhalten. Hierdurch wird das Rotorblatt durch Luftkräfte in der Weise verformt, dass das Schwingungsverhalten des Rotorblattes verbessert wird. Die Frequenzen, mit denen die Klappen angesteuert werden, liegen beispielsweise im Bereich von 35 Hz und höher.

Bedingt durch die wechselseitigen Bewegungen und die relativ hohen Frequenzen verschleißen die Lager in kurzer Zeit. Dies hat zur Folge, dass die Wartungsintervalle kurz sind und die Lager oft ausgetauscht werden müssen. Durch die im Bereich des Rotorblatts auftretenden Kräfte sind die Lager hohen Belastungen ausgesetzt.

Aus dem Zeitschriftenartikel "Development of Piezoelectric Servoflap for Helicopter Rotor Control", vom Department of Aeronautics and Astronautics, Massachusetts Institute of Technology, Cambridge, MA 02139-4307, USA, 1996, IOP Publishing Ltd, ist ein Rotorblatt für einen Hubschrauber bekannt, mit: einer beweglichen Klappe, die in einem Profilbereich des Rotorblattes angeordnet ist; Mitteln zum Verstellen der Klappe um einen Anstellwinkel gegenüber dem restlichen Teil des Rotorblatts; und - bei Betrachtung des Rotorblattes in einem Profilquerschnitt - drei aus Delrin® hergestellten biegeweichen Verbindungselementen, die an unterschiedlichen Stellen des Profilquerschnitts angeordnet sind und an denen die Klappe mehrfach gelagert ist und welche die Klappe mit dem Rotorblatt verbinden, so dass bei einer auf die Klappe wirkenden Stellkraft eine Verbiegung der drei Verbindungselemente und ein Verstellen der Klappe relativ zum Rotorblatt erfolgt.

Aus der DE-A-28 04 254 ist ein Tragflügel für ein Tragflächenflugzeug bekannt, mit einer beweglichen Klappe, die in einem hinteren Profilbereich des Tragflügels angeordnet ist; Mitteln zum Verstellen der Klappe um einen Anstellwinkel gegenüber dem restlichen Teil des Tragflügels; und - bei Betrachtung des Tragflügels in einem Profilquerschnitt - einer innerhalb des Profilquerschnittes zwischen der Klappe und einem hinteren Tragflügelbereich angeordneten Klappenlagerung in Form einer Kurvenführung, an der die Klappe schwenkbar gelagert ist. An der Oberseite des Tragflügels und in einem Übergangsbereich zwischen der Klappe, der Kurvenführung und einem an diese Elemente angrenzenden Tragflügel ist die obere Außenhautstruktur des Tragflügels als dünnes, biegsames Hautelement (in der DE-A-28 04 254 als "Membran" bezeichnet) ausgestaltet, welches die Kurvenführung verkleidet und sich bei einer Schwenkbewegung der Klappe elastisch verbiegen und den Bewegungen der Klappe folgen kann. Bei dieser Konstruktion übernimmt also die Kurvenführung die Lagerung der Klappe, während die dünne, biegsame Membrane an der Außenkontur des Tragflügel-Profilquerschnitts keine Lagerfunktionen ausübt, sondern den eigentlichen Lagermechanismus der Klappe lediglich an der kritischen Profiloberseite aerodynamisch verkleidet.

### DARSTELLUNG DER ERFINDUNG

Es ist Aufgabe der vorliegenden Erfindung, ein Rotorblatt für einen Hubschrauber zu schaffen, mit dem die oben genannten Nachteile überwunden werden können, wobei eine dauerfeste Lagerung der Klappen ermöglicht wird, der Verschleiß reduziert wird und Beschädigungen durch die hohe Beanspruchung vermieden werden.

Diese Aufgabe wird durch das Rotorblatt für einen Hubschrauber gemäß Patentanspruch 1 gelöst. Weitere vorteilhafte Merkmale, Aspekte und Details der Erfindung ergeben sich aus den abhängigen Ansprüchen, der Beschreibung und den Zeichnungen.

Durch die vorliegende Erfindung werden Rotorblätter mit beweglichen Klappen geschaffen, die eine verschleißfreie Lagerung haben, hohen Belastungen standhalten und einen wesentlich geringeren Wartungsaufwand benötigen. Auch bei hohen Frequenzen der Klappenbewegung bleibt die Lagerung dauerhaft und stabil, und es wird ein Anstellwinkel der Klappen von ca. ±15° und mehr ermöglicht. Darüber hinaus wird eine verbesserte Aerodynamik erzielt. Störende Vibrationen können gedämpft werden, insbesondere in Verbindung mit einer Ansteuerung der Klappen mit hoher Frequenz durch piezoelektrische Elemente. Und es wird eine hohe Ausfallsicherheit bei besonders leichter und kompakter Bauweise erzielt. Auch bei hohen Frequenzen der Klappenbewegung können die Wartungs- bzw. Kontrollintervalle merklich verlängert werden.

Das Verbindungselement ist bevorzugt aus faserverstärktem Kunststoff hergestellt bzw. enthält Fasern, die Glasfasern sein können. Mit den Fasern wird eine besonders hohe Festigkeit bei geringem Gewicht bewirkt. Glasfasern ermöglichen dabei eine besonders große Elastizität bzw. Dehnungsunempfindlichkeit des Verbindungselements und eine hohe Dauerfestigkeit.

Bevorzugt weist das Verbindungselement im Biegebereich eine geringere Dicke auf als in den daran angrenzenden Bereichen.

Vorzugsweise verlaufen die Fasern im Verbindungselement in Richtung der Verbindung zwischen dem Rotorblatt und der Klappe, und vorteilhafterweise weisen die Fasern im Biegebereich einen geringeren gegenseitigen Abstand auf als im übrigen Bereich des Verbindungselements.

Bevorzugt ist eine obere Wand des Rotorblatts mit einem Oberteil der Klappe und/oder eine untere Wand des Rotorblatts mit einem Unterteil der Klappe durch das Verbindungselement verbunden. Hierdurch wird eine besonders gute Aerodynamik des Rotorblatts erzielt.

Bevorzugt berühren sich das Oberteil und das Unterteil der Klappe gegenseitig in einem Endbereich der Klappe und bewegen sich bei einem Ausschlag der Klappe relativ zueinander an einer Gleitfläche, die bevorzugt aus Teflon gefertigt ist. Dadurch wird eine feste Verbindung der Klappe mit der Ober- und Unterseite des Rotorblatts ermöglicht. Bei einer Klappenauslenkung wird ein Spalt zwischen Klappe und Rotorblatt vermieden. Ein Abrieb an der Berührungsfläche wird verhindert.

Vorteilhafterweise sind das Oberteil und das Unterteil der Klappe gegeneinander vorgespannt. Bei der Ansteuerung von nur einem Klappenteil wird hierdurch das gegenüberliegende Klappenteil mitbewegt.

Bevorzugt ist das Verbindungselement und der jeweils daran anschließende Bereich des Rotorblatts bzw. der Klappe einstückig ausgebildet, vorteilhafterweise über die gesamte Breite des Verbindungselements. Insbesondere kann das Verbindungselement bei Betrachtung des Rotorblattes im Querschnitt bzw. im Profil in der Symmetrieachse der Klappe angeordnet sein. Hierdurch wird ein mögliches Ausknicken des Verbindungselements vermieden. Bevorzugt ist die Klappe durch mindestens einen Hebelarm bewegbar, der das Oberteil und/oder das Unterteil der Klappe mit einer Zug- oder Druckstange zur Übertragung der Stellkraft verbindet. Dadurch kann eine Bewegung der Klappe bzw. der Klappenhälften mit Zug- oder Druckkräften erfolgen, was für eine mögliche Piezosteuerung von Vorteil ist. Jedes Klappenteil kann mit einem separaten Hebelarm angesteuert werden. Hierdurch wird die zur Bewegung der Klappe erforderliche Kraft reduziert.

Vorteilhafterweise umfaßt der Hebelarm ein Fasergelenk, um die Stellkraft auf die Klappen zu übertragen. Der Hebelarm kann als Zugstange ausgebildet sein, die bevorzugt aus einer oder mehreren Fasern, insbesondere Glasfasern, gefertigt ist. Dadurch wird auch im Bereich des Hebelarms der Verschleiß bei der Kraftübertragung von dem Hebel auf die Klappe reduziert. Darüber hinaus wird eine hohe und dauerhafte Festigkeit des Hebels bei kleiner Bauweise und geringem Gewicht erzielt.

### KURZE BESCHREIBUNG DER ZEICHNUNGEN

Die vorliegende Erfindung wird nachfolgend anhand der Zeichnungen beschrieben, in denen
- **Fig. 1**: eine Draufsicht auf ein erfindungsgemäßes Rotorblatt eines Hubschraubers mit einer beweglichen Steuerklappe im Profilbereich zeigt:
- **Fig. 2**: einen Querschnitt durch ein Hubschrauber-Rotorblatt im Bereich der Klappe gemäß einer ersten Ausführungsform der vorliegenden Erfindung schematisch zeigt.
- **Fig. 3**: einen Querschnitt durch einen hinteren Profilbereich eines erfindungsgemäßen Rotorblatts im Bereich der Klappe schematisch zeigt.
- **Fig. 4**: einen teilweisen Querschnitt durch ein Hubschrauber-Rotorblatt im Klappenbereich gemäß einer weiteren Ausführungsform der vorliegenden Erfindung zeigt.

### DARSTELLUNG VON BEVORZUGTEN AUSFÜHRUNGSBEISPIELEN

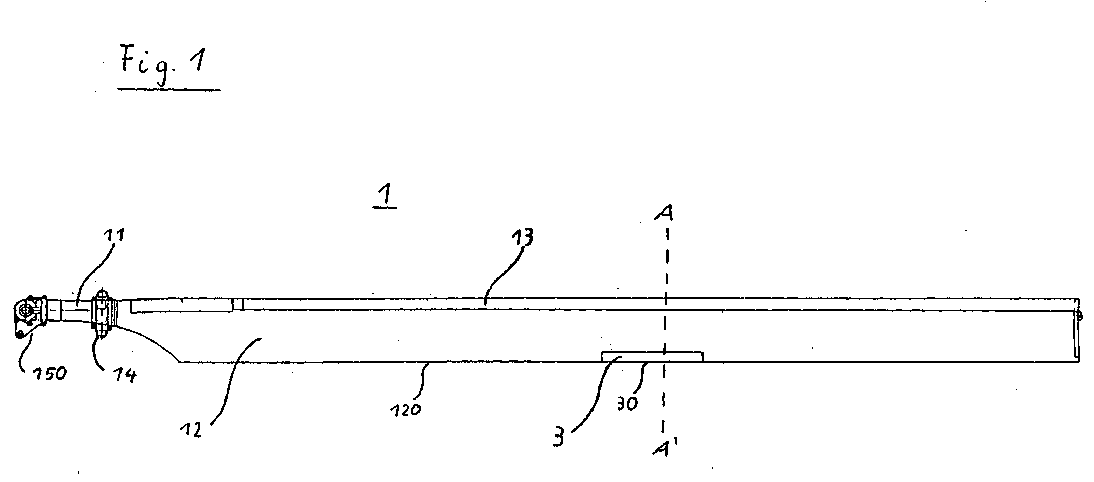

Figur 1 zeigt ein erfindungsgemäßes Rotorblatt 1 eines Hubschraubers. Das Rotorblatt 1 umfaßt einen Blattanschlußbereich bzw. eine Blattwurzel 11 und einen sich daran anschließenden Profilbereich 12. Im Bereich des hinteren Profilendes 120 des Rotorblatts 1 ist eine bewegliche Klappe 3 angeordnet. Die Klappe 3 ist dabei so ausgestaltet, dass sie einen Teil des Blattprofils bildet. Ein hinteres Ende 30 der Klappe 3 liegt mit dem hinteren Profilende 120 des restlichen Blatteils auf einer Linie, d.h. es steht in seiner Ausgangsposition gegenüber dem restlichen Teil des Profilbereichs 12 nicht hervor. Im vorderen Teil des Profilbereichs 12 befindet sich ein Beschlag 13 aus Metall, der die vordere Blattkante überdeckt und gegen Erosion bzw. Beschädigung schützt. An der Blattwurzel 11 ist noch ein Schwingungstilger 14 und ein Anschlußstück 150 angeordnet.

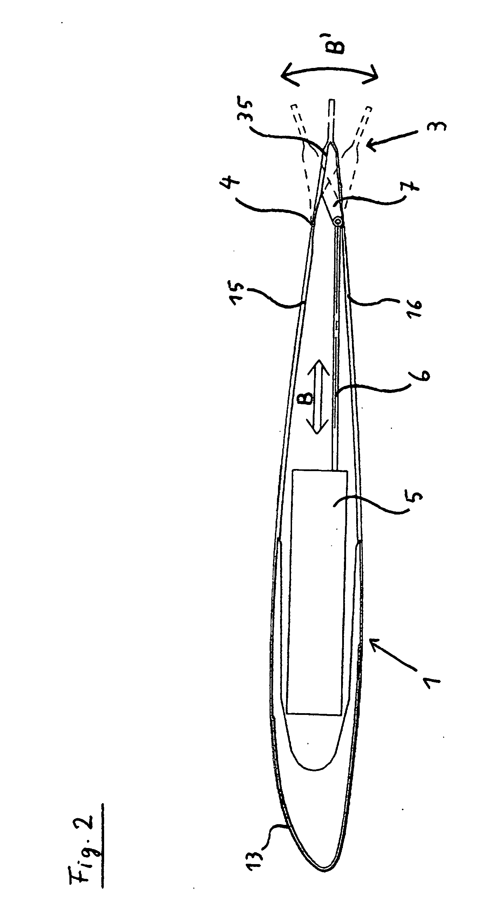

Figur 2 zeigt schematisch einen Querschnitt durch das erfindungsgemäße Rotorblatt entlang der Linie A - A' von Figur 1. Die Klappe 3 am hinteren Profilende des Rotorblatts 1 ist - bezogen auf die Betrachtung des Rotorblattes1 in dem Querschnitt nach Fig. 2 - über ein einziges biegeweiches Verbindungselement 4, das als Fasergelenk aus faserverstärktem Kunststoff gefertigt ist, mit dem restlichen Teil des Rotorblatts 1 verbunden. Die gestrichelten Linien in Figur 2 zeigen die Klappe 3 in verschiedenen Stellungen relativ zum Rotorblatt 1. In dieser Ausführungsform ist eine obere Wand 15 des Rotorblatts 1 mit einem Oberteil 35 der Klappe 3 durch das biegeweiche Fasergelenk bzw. Verbindungselement 4 verbunden. Im Bereich der Verbindung ist das Verbindungselement 4 zusammen mit den daran angrenzenden Bereichen der Klappe 3 und des Rotorblatts 1 über seine gesamte Breite einstückig ausgebildet.

Zwischen der oberen Wand 15 des Rotorblatts 1 und seiner unteren Wand 16 befindet sich in seinem Innenraum eine Ansteuerungseinheit 5 mit piezoelektrischen Elementen. Die Ansteuerungseinheit 5 ist über eine Zug-/Druckstange 6 und ein Hebelelement 7 mit der Steuerklappe 3 verbunden. Bei einer Bewegung der Zug-/Druckstange 6 in ihrer Längsrichtung, d.h. in Richtung des Doppelpfeils B in Figur 2, erfolgt eine Auslenkung der Klappe 3 gegenüber dem Rotorblatt 1, wie sie durch den Doppelpfeil B' in Figur 2 dargestellt ist. Der Antrieb der Klappe 3 erfolgt elektrisch, z.B. über piezoelektrische Elemente, mit einer Frequenz, die 35 Hz und mehr betragen kann.

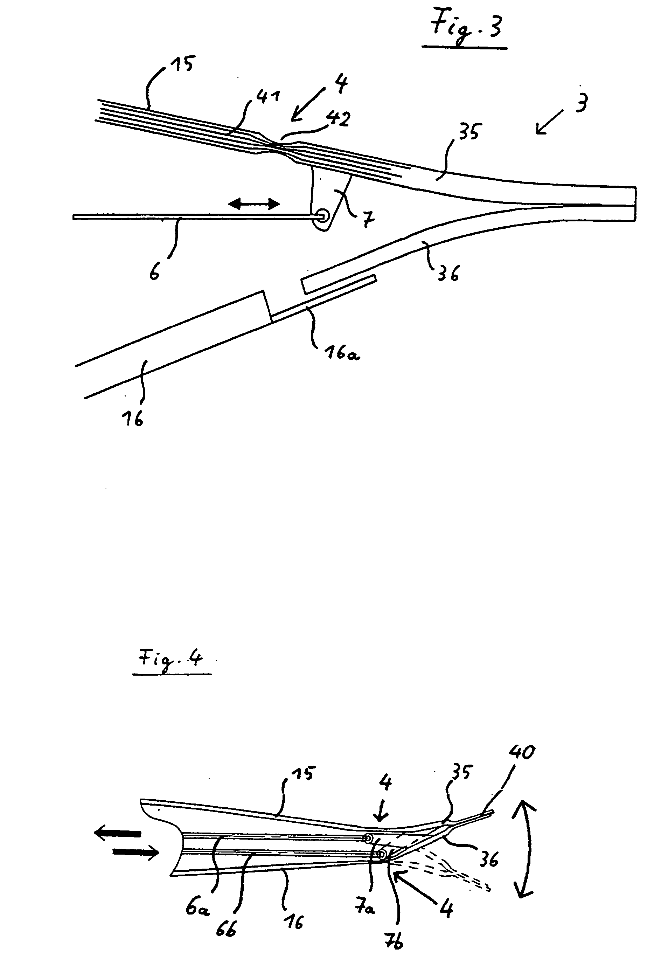

Figur 3 zeigt schematisch den hinteren Profilbereich einer Ausführungsform des Rotorblatts 1 in vergrößerter Darstellung. Das Verbindungselement 4 zwischen der Oberseite 15 des Rotorblatts 1 und dem Klappenoberteil 35 weist Glasfasern 41 auf, die in Richtung der Verbindung zwischen dem Rotorblatt 1 und der Klappe 3 verlaufen. Die Fasern 41 sind hier nur im Bereich des Verbindungselements 4 und in den daran angrenzenden Bereichen dargestellt. Das Fasergelenk bzw. Verbindungselement 4 hat einen Biegebereich 42 mit einer relativ geringen Dicke. Durch die gegenüber den restlichen Bereichen an dieser Stelle reduzierte Dicke bzw. Höhe des Verbindungselements erfolgt die Bewegung der Klappe 3 um ein Achse, die in diesem Bereich liegt.

Die untere Wand 16 des Rotorblatts 1 ist mit einer Schürze 16a versehen, die am Ende der unteren Wand 16 hervorsteht und einen Spalt zwischen dem Ende der unteren Wand 16 des Rotorblattes 1 und dem Unterteil 36 der Klappe 3 abdeckt. Dadurch wird eine negative Beeinflussung der Strömung an der Seite des Rotorblattes, die dem Verbindungselement 4 gegenüberliegt, verhindert.

Der gegenseitige Abstand der Fasern 41 ist im Biegebereich 42 reduziert. Durch den durchgehenden Faserverlauf wird eine besonders hohe Festigkeit erzielt.

Das Verbindungselement 4 kann auch an der unteren Wand des Rotorblattes 1 angeordnet sein, wobei die Schürze 16a in diesem Fall auf der oberen Wand des Rotorblattes 1 angeordnet ist. Dabei ist die Klappe 3 durch das Verbindungselement 4 über seine gesamte Breite mit dem restlichen Blattteil verbunden. Durch den glatten Übergang an der Oberfläche des Rotorblattes 1 im Bereich des Verbindungselements 4 ergeben sich stark verbesserte aerodynamische Eigenschaften. Bei einem glatten Übergang zur Klappe 3 auf der Unterseite des Rotorblattes 1 wird ebenfalls eine besonders gute Aerodynamik erzielt.

Figur 4 zeigt eine weitere Ausführungsform der Erfindung. Dabei sind sowohl die obere Wand 15 als auch die untere Wand 16 des Rotorblattes 1 mit der Oberseite 35 bzw. der Unterseite 36 der Klappe 3 über Verbindungselemente 4 verbunden. Die beiden Klappenteile werden über getrennte Hebelarme 7a, 7b und Zug-/Druckstäbe 6a, 6b bewegt. Am hinteren Endbereich der Klappe 3 stehen das Oberteil 35 und das Unterteil 36 der Klappe in gegenseitigem Gleitkontakt. An der Berührungsfläche zwischen den beiden Klappenteilen befindet sich eine Gleitfläche 40 aus Teflon, um einen Verschleiß bzw. einen Abrieb an dieser Stelle zu verhindern.

Die Zug-/Druckstangen 6a und 6b arbeiten gegenläufig. Bei einer Zugkraft, die über die obere Stange 6a und das obere Hebelelement 7a auf das Unterteil 36 der Klappe wirkt, wird die Klappe 3 nach oben ausgelenkt. Gleichzeitig erfolgt eine Druckkraft auf das Oberteil 35 der Klappe über die untere Stange 6b und das untere Hebelelement 7b. Hierdurch ist für die Bewegung jedes Klappenteils nur die halbe Kraft erforderlich. Die beiden Enden der Klappenteile 35 und 36, die miteinander über die Gleitfläche 40 in Kontakt stehen, bleiben bei jeder Stellung bzw. Auslenkung der Klappe 3 miteinander verbunden. Durch die beiden Verbindungselemente 4 an der oberen Wand 15 und an der unteren Wand 16 des Rotorblatts 1 wird eine besonders hohe Festigkeit und Dauerhaftigkeit der Klappenbefestigung erzielt, und es werden glatte Oberflächen ohne Zwischenräume und Spalten geschaffen. Bei einer Auslenkung der Klappe 3 nach oben bzw. nach unten bewegen sich die beiden Klappenteile 35 und 36 gegeneinander an der Gleitfläche 40, die im hinteren Bereich der Klappe 3 auf einem oder auf beiden Klappenteilen angebracht ist.

Das Oberteil 35 und das Unterteil 36 der Klappe 3 sind gegeneinander vorgespannt. Dadurch ist ein Antrieb der beiden Klappenteile 35 und 36 über lediglich einen der Hebelarme 7a und 7b möglich. In der in Figur 4 beschriebenen Ausführungsform wird hierdurch eine Redundanz erreicht, da beim Ausfall eines Antriebs bzw. beim Bruch einer Zug-/Druckstange 6a bzw. 6b ein Antrieb der Klappe 3 über die weitere Zug-/Diuckstange weiterhin möglich ist.

In einer weiteren Ausführungsform, die hier nicht dargestellt ist, ist der Hebelarm 7 als integriertes biegeweiches Fasergelenk ausgestaltet. Die Zugstange 6 ist dabei in den Hebelarm 7 integriert bzw. einstückig mit diesem ausgestaltet und besteht aus einer oder mehreren Glasfasern. Wie bei der in Figur 4 beschriebenen Ausführungsform greift auch in diesem Fall jeweils ein Hebelarm an der Ober- bzw. Unterseite der Klappe 3 an. Durch die gegenseitige Vorspannung der beiden Klappenteile erfolgt ein Anstellen der Klappe 3 nur durch Zugkräfte. Dies ist bei einem Antrieb mit Piezoelementen vorteilhaft und ermöglicht eine leichte und kleine Bauweise.

Das Fasergelenk bzw. Verbindungselement 4 weist in seinem Biegebereich eine Wandstärke von ca. 0,5 - 1 mm auf. Bei einer solchen Wandstärke wird eine ausreichende Festigkeit bzw. gute Biegeeigenschaft erreicht, wobei dadurch eine hohe und dauerhafte Festigkeit vorhanden ist.

## Patentansprüche

1. Rotorblatt für einen Hubschrauber, mit
- einer beweglichen Klappe (3), die in einem Profilbereich (12) des Rotorblattes angeordnet ist,
- Mitteln (5, 6, 7; 6a, 6b, 7a, 7b) zum Verstellen der Klappe (3) um einen Anstellwinkel gegenüber dem restlichen Teil des Rotorblatts (1 ), und
- bei Betrachtung des Rotorblattes in einem Profilquerschnitt - ein einziges, als biegeweiches Fasergelenk mit einem Biegebereich (42) ausgestaltetes Verbindungselement (4), an dem die Klappe (3) gelagert ist und welches die Klappe (3) mit dem Rotorblatt (1) verbindet, so dass bei einer auf die Klappe (3) wirkenden Stellkraft eine Verbiegung des Verbindungselements (4) in seinem Biegebereich (42) und ein Verstellen der Klappe (3) relativ zum Rotorblatt (1) erfolgt.

2. Rotorblatt für einen Hubschrauber, mit
- einer beweglichen Klappe (3), die in einem Profilbereich (12) des Rotorblattes angeordnet ist,
- Mitteln (5, 6, 7; 6a, 6b, 7a, 7b) zum Verstellen der Klappe (3) um einen Anstellwinkel gegenüber dem restlichen Teil des Rotorblatts (1 ), und
- bei Betrachtung des Rotorblattes in einem Profilquerschnitt - zwei einzelne, jeweils als biegeweiches Fasergelenk mit einem Biegebereich (42) ausgestaltete Verbindungselemente (4), die an einer oberen (15) und einer unteren Wand (16) des Rotorblattes (1) angreifen und an denen die Klappe (3) gelagert ist und welche die Klappe (3) mit dem Rotorblatt (1) verbinden, so dass bei einer auf die Klappe (3) wirkenden Stellkraft eine Verbiegung der Verbindungselemente (4) in ihrem jeweiligen Biegebereich (42) und ein Verstellen der Klappe (3) relativ zum Rotorblatt (1) erfolgt.

3. Rotorblatt nach Anspruch 1 oder 2.
**dadurch gekennzeichnet, dass**
das Verbindungselement (4) aus mit Fasern (41) verstärktem Kunststoff hergestellt ist.

4. Rotorblatt nach Anspruch 3,
**dadurch gekennzeichnet, dass**
die Fasern (41) Glasfasern sind.

5. Rotorblatt nach Anspruch 3 oder 4,
**dadurch gekennzeichnet, dass**
die Fasern (41) im Verbindungselement (4) in Richtung der Verbindung zwischen dem Rotorblatt (1) und der Klappe (3) verlaufen und im Biegebereich (42) einen geringeren gegenseitigen Abstand aufweisen als im übrigen Bereich des Verbindungselements (4).

6. Rotorblatt nach einem der vorhergehenden Ansprüche,
**dadurch gekennzeichnet, dass**
das Verbindungselement (4) in seinem Biegebereich (42) eine geringere Dicke aufweist, als in daran angrenzenden Bereichen.

7. Rotorblatt nach einem der vorhergehenden Ansprüche,
**dadurch gekennzeichnet, dass**
das Verbindungselement (4) eine obere Wand (15) des Rotorblatts (1) mit einem Oberteil (35) der Klappe (3) und/oder eine untere Wand (16) des Rotorblatts (1) mit einem Unterteil (36) der Klappe (3) verbindet.

8. Rotorblatt nach einem der vorhergehenden Ansprüche,
**dadurch gekennzeichnet, dass**
sich das Oberteil (35) und das Unterteil (36) der Klappe (3) in einem Endbereich der Klappe (3) gegenseitig berühren und sich bei einem Verstellen der Klappe (3) an einer Gleitfläche (40) relativ zueinander bewegen.

9. Rotorblatt nach Anspruch 8,
**dadurch gekennzeichnet, dass**
die Gleitfläche (40) aus Teflon® gefertigt ist.

10. Rotorblatt nach einem der Ansprüche 8 oder 9,
**dadurch gekennzeichnet, dass**
das Oberteil (35) und das Unterteil (36) der Klappe (3) gegeneinander vorgespannt sind.

11. Rotorblatt nach einem der vorhergehenden Ansprüche,
**dadurch gekennzeichnet, dass**
das Verbindungselement (4) und ein sich daran anschließender Bereich des Rotorblatts (1) und der Klappe (3) über die gesamte Breite des Verbindungselements (4) einstückig ausgebildet sind.

12. Rotorblatt nach einem der vorhergehenden Ansprüche,
**dadurch gekennzeichnet, dass**
das Verbindungselement (4) bei Betrachtung des Rotorblattes im Querschnitt bzw. im Profil in der Symmetrieachse der Klappe (3) angeordnet ist.

13. Rotorblatt nach einem der vorhergehenden Ansprüche,
**gekennzeichnet durch**
mindestens einen Hebelarm (7; 7a, 7b), der das Oberteil (35) und/oder das Unterteil (36) der Klappe (3) mit einer Zug- und/oder Druckstange (6; 6a, 6b) zur Übertragung der Stellkraft verbindet.

14. Rotorblatt nach Anspruch 13,
**dadurch gekennzeichnet, dass**
jedes Klappenteil (35; 36) mit einem Hebelarm (7; 7a, 7b) verbunden ist.

15. Rotorblatt nach Anspruch 13 oder 14,
**dadurch gekennzeichnet, dass**
der Hebelarm (7; 7a, 7b) ein Fasergelenk aufweist.

16. Rotorblatt nach einem der Ansprüche 13 bis 15, **dadurch gekennzeichnet, dass** die Zugstange (6a, 6b) aus einer oder mehreren Fasern, insbesondere Glasfasern, gefertigt ist.

17. Rotorblatt nach einem der vorhergehenden Ansprüche, **gekennzeichnet durch** eine Antriebseinheit (5), die piezoelektrische Elemente zum Antrieb der Klappe (3) aufweist.

## Claims

1. Rotor blade for a helicopter, comprising
- a movable flap (3) which is disposed in a profile region (12) of the rotor blade,
- means (5, 6, 7; 6a, 6b, 7a, 7b) ofor displacing the flap (3) by an angle of attack relative to the remaining part of the rotor blade (1), and
- viewing the rotor blade in a profile cross section
- a single connection element (4), which is designed as a flexible fibre joint with a bending region (42) and on which the flap (3) is mounted and which connects the flap (3) to the rotor blade (1), so that in the event of an actuating force acting upon the flap (3), a bending of the connection element (4) in its bending region (42) and a displacement of the flap (3) relative to the rotor blade (1) is effected.

2. Rotor blade for a helicopter, comprising
- a movable flap (3), which is disposed in a profile region (12) of the rotor blade,
- means (5, 6, 7; 6a, 6b, 7a, 7b) ofor displacing the flap (3) by an angle of attack relative to the remaining part of the rotor blade (1), and
- viewing the rotor blade in a profile cross section
- two individual connection elements (4), which are each designed as a flexible fibre joint with a bending region (42) and act on an upper wall (15) and a lower wall (16) of the rotor blade (1) and on which the flap (3) is mounted and which connect the flap (3) to the rotor blade (1), so that in the event of an actuating force acting upon the flap (3) a bending of the connection elements (4) in their respective bending region (42) and a displacement of the flap (3) relative to the rotor blade (1) is effected.

3. Rotor blade according to claim 1 or 2,
**characterized in that**
the connection element (4) is manufactured from plastics material reinforced with fibres (41).

4. Rotor blade according to claim 3,
**characterized in that**
the fibres (41) are glass fibres.

5. Rotor blade according to claim 3 or 4,
**characterized in that**
the fibres (41) in the connection element (4) extend in the direction of the connection between the rotor blade (1) and the flap (3) and are at a smaller mutual spacinge in the bending region (42) than in the remaining region of the connection element (4).

6. Rotor blade according to one of the preceding claims,
**characterized in that**
the connection element (4) is less thick in its bending region (42) than in regions adjacent thereto.

7. Rotor blade according to one of the preceding claims,
**characterized in that**
the connection element (4) connects an upper wall (15) of the rotor blade (1) to an upper part (35) of the flap (3) and/or a lower wall (16) of the rotor blade (1) to a lower part (36) of the flap (3).

8. Rotor blade according to one of the preceding claims,
**characterized in that**
the upper part (35) and the lower part (36) of the flap (3) are in mutual contact in an end region of the flap (3) and during displacement of the flap (3) move relative to one another at a sliding surface (40).

9. Rotor blade according to claim 8,
**characterized in that**
the sliding surface (40) is manufactured from Teflon®.

10. Rotor blade according to one of claims 8 or 9,
**characterized in that**
the upper part (35) and the lower part (36) of the flap (3) are biased towards one another.

11. Rotor blade according to one of the preceding claims,
**characterized in that**
the connection element (4) and an adjoining region of the rotor blade (1) and of the flap (3) are of an integral construction over the entire width of the connection element (4).

12. Rotor blade according to one of the preceding claims,
**characterized in that**
the connection element (4), when the rotor blade is viewed in cross section and/or in profile, is disposed in the axis of symmetry of the flap (3).

13. Rotor blade according to one of the preceding claims,
**characterized by**
at least one lever arm (7; 7a, 7b), which connects the upper part (35) and/or the lower part (36) of the flap (3) to a pull and/or push rod (6; 6a, 6b) for transmission of the actuating force.

14. Rotor blade according to claim 13,
**characterized in that**
each flap part (35; 36) is connected to a lever arm (7; 7a, 7b).

15. Rotor blade according to claim 13 or 14,
**characterized in that**
the lever arm (7; 7a, 7b) has a fibre joint.

16. Rotor blade according to one of claims 13 to 15,
**characterized in that**
the pull rod (6a, 6b) is manufactured from one or more fibres, in particular glass fibres.

17. Rotor blade according to one of the preceding claims,
**characterized by**
a drive unit (5), which has piezoelectric elements for driving the flap (3).

## Revendications

1. Pale de rotor pour hélicoptère comportant :
- un clapet mobile (3) disposé dans une zone profilée (12) de la pale de rotor,
- des moyens (5, 6, 7 ; 6a, 6b, 7a, 7b) pour déplacer le clapet (3) d'un angle d'incidence par rapport à la partie restante de la pale de rotor (1) et
- lorsqu'on regarde la pale de rotor dans une section transversale profilée - un seul élément de liaison (4) configuré comme une articulation en fibres flexible avec une zone de flexion (42), sur lequel est logé le clapet (3) et qui relie le clapet (3) à la pale de rotor (1) de sorte que, dans le cas d'une force de réglage agissant sur le clapet (3), il se produit une déformation de l'élément de liaison (4) dans sa zone de flexion (42) et un déplacement du clapet (3) relativement à la pale de rotor (1).

2. Pale de rotor pour hélicoptère comportant :
- un clapet mobile (3) disposé dans une zone profilée (12) de la pale de rotor,
- des moyens (5, 6, 7 ; 6a, 6b, 7a, 7b) pour déplacer le clapet (3) d'un angle d'incidence par rapport à la partie restante de la pale de rotor (1) et
- lorsqu'on regarde la pale de rotor dans une section transversale profilée - deux éléments de liaison (4) individuels, configurés comme une articulation en fibres flexible avec une zone de flexion (42), qui agissent sur une paroi supérieure (15) et une paroi inférieure (16) de la pale de rotor (1) et sur lesquels est logé le clapet (3) et qui relient le clapet (3) à la pale de rotor (1) de sorte que, dans le cas d'une force de réglage agissant sur le clapet (3), il se produit une déformation de l'élément de liaison (4) dans sa zone de flexion (42) correspondante et un déplacement du clapet (3) relativement à la pale de rotor (1).

3. Pale de rotor selon la revendication 1 ou 2,
**caractérisée en ce que**
l'élément de rotor (4) est fabriqué en matière plastique renforcée par des fibres (41).

4. Pale de rotor selon la revendication 3,
**caractérisée en ce que**
les fibres (41) sont des fibres de verre.

5. Pale de rotor selon la revendication 3 ou 4,
**caractérisée en ce que**
les fibres (41) s'étendent, dans l'élément de liaison (4) en direction de la liaison entre la pale de rotor (1) et le clapet (3) et présentent, dans la zone de flexion (42) une distance réciproque plus faible que dans le reste de la zone de l'élément de liaison (4).

6. Pale de rotor selon l'une quelconque des revendications précédentes,
**caractérisée en ce que**
l'élément de liaison (4) présente, dans sa zone de flexion (42) une épaisseur plus faible que dans les zones contiguës.

7. Pale de rotor selon l'une quelconque des revendications précédentes,
**caractérisée en ce que**
l'élément de liaison (4) relie une paroi supérieure (15) de la pale de rotor (1) à une partie supérieure (35) du clapet (3) et/ou une paroi inférieure (16) de la pale de rotor (1) à une partie inférieure (36) du clapet (3).

8. Pale de rotor selon l'une quelconque des revendications précédentes,
**caractérisée en ce que**
la partie supérieure (35) et la partie inférieure (36) du clapet (3) se touchent réciproquement dans une zone d'extrémité du clapet (3) et bougent relativement l'une par rapport à l'autre lors d'un déplacement du clapet (3) sur une surface de glissement (40).

9. Pale de rotor selon la revendication 8,
**caractérisée en ce que**
la surface de glissement (40) est fabriquée en Téflon®.

10. Pale de rotor selon l'une quelconque des revendications 8 ou 9,
**caractérisée en ce que**
la partie supérieure (35) et la partie inférieure (36) du clapet (3) sont précontraintes l'une contre l'autre.

11. Pale de rotor selon l'une quelconque des revendications précédentes,
**caractérisée en ce que**
l'élément de liaison (4) et une zone adjacente de la pale de rotor (1) et du clapet (3) forment une seule pièce sur toute la largeur de l'élément de liaison (4).

12. Pale de rotor selon l'une quelconque des revendications précédentes,
**caractérisée en ce que**
l'élément de liaison (4), lorsqu'on regarde la pale de rotor dans la section transversale ou de profil, est disposé sur l'axe de symétrie du clapet (3).

13. Pale de rotor selon l'une quelconque des revendications précédentes,
**caractérisée par**
au moins un bras de levier (7 ; 7a, 7b), qui relie la partie supérieure (35) et/ou la partie inférieure (36) du clapet (3) à une barre de traction et/ou de pression (6 ; 6a, 6b) pour transmettre la force de réglage.

14. Pale de rotor selon la revendication 13,
**caractérisée en ce que**
chaque partie du clapet (35 ; 36) est reliée à un bras de levier (7 ; 7a, 7b).

15. Pale de rotor selon la revendication 13 ou 14,
**caractérisée en ce que**
le bras de levier (7 ; 7a, 7b) présente une articulation en fibres.

16. Pale de rotor selon l'une quelconque des revendications 13 à 15,
**caractérisée en ce que**
la barre de traction (6a, 6b) est fabriquée à partir d'une ou plusieurs fibres, en particulier des fibres de verre.

17. Pale de rotor selon l'une quelconque des revendications précédentes,
**caractérisée en ce qu'**
une unité d'entraînement (5) présente les éléments piézo-électriques destinés à l'entraînement du clapet (3).
